Europäisches Patentamt

European Patent Office

Office européen des brevets

(11) Publication number: **0 471 408 A1**

# EUROPEAN PATENT APPLICATION

(21) Application number: **91202034.4**

(22) Date of filing: **07.08.91**

(51) Int. Cl.5: **A23J 1/20**, A23J 1/06, A23J 1/00

(30) Priority: **13.08.90 US 566288**

(43) Date of publication of application:
**19.02.92 Bulletin 92/08**

(84) Designated Contracting States:
**AT BE CH DE DK ES FR GB GR IT LI LU NL SE**

(71) Applicant: **MERCK & CO. INC.**
**126, East Lincoln Avenue P.O. Box 2000**
**Rahway New Jersey 07065-0900(US)**

(72) Inventor: **Lawson, Margaret A.**
**3559 Ruffin Road, Apt. 160**
**San Diego, California 92123(US)**
Inventor: **Lin, Shao Wen**
**3820 Pendiente Court, Apt. N106**
**San Diego, California 92124(US)**

(74) Representative: **Barrett-Major, Julie Diane et al**
**Merck & Co., Inc. European Patent Department Terlings Park Eastwick Road Harlow Essex CM20 2OR(GB)**

(54) **Method for recovering proteins using xanthan gum.**

(57) Disclosed is a method for recovering protein from processing waste using xanthan gum. The method comprises the addition of xanthan gum to a protein bearing waste in an amount effective to precipitate the protein in the form of easily removable fibers. Where the protein is recovered from dairy whey or other food grade waste, the resulting protein/xanthan complex is useful as food additive.

## BACKGROUND OF THE INVENTION

The invention concerns a method of recovering protein from waste by use of a polysaccharide. In particular the invention concerns the recovery of protein from food processing waste by use of xanthan gum.

Food processing waste effluent causes severe waste disposal problems. However, they also represent a potential source of protein or other valuable food or feed ingredients. In recognition of this problem and opportunity, a number of methods have been devised to recover the maximum possible amount protein from food processing and other agricultural waste.

Canadian Patent No. 995,971, for example, relates to a process of precipitating the greatest possible amount of whey protein by addition of CMC at acidic pH. After centrifugation, the precipitated slurry is redissolved and spray-dried.

U.S. Patent 4,865,975 relates to a process of using alginate and pectin in combination with calcium salts and magnesium salts to recover the greatest possible amount of dairy proteins.

Japanese Patent No. 57,132,508 teaches a method of using alginate and carrageenan to maximize protein recovery. The complex is said to possess unique functional properties and can be used as feed ingredients. However, these polysaccharide form very fine and fragile precipitate with protein and hence cause difficulty in separation.

Goncalves, MP; Bourgeois, C.M., SC1 Aliments 6 (2) 137-145, 1986, describes the use of xanthan gum to recover proteins.

The art fails to appreciate, however, that a significant portion of the food processing industry, is composed of small processors, or conservatively managed processors or both. Such processors are, in general, unable or at least loath to commit themselves to the capital outlay necessary to achieve maximum recovery of protien from their food processing waste stream. Typically, expensive equipment, such as a centrifuge, is needed to recover the protein precipitate.

Membrane processing (reverse osmosis or ultrafiltration) coupled with spray drying has also been used to recover waste proteins. Different polymers and coagulants have also been used to recover waste proteins (Japanese Patent No. 53,001,958, U.S. Patent No. 4,072,606, U.K. Patent No. 2,019,378). However, due to the nature of the chemical compounds used, the resultant precipitate cannot be used as a feed or food ingredient.

It is an object of the present invention to provide a method for economically optimal recovery of protein from a food processing waste, identifying process steps and conditions that provide for simple low cost recovery of substantial, though not necessarily maximum recovery of such protein in a food grade form.

In the present study, we have found that surprisingly xanthan gum forms long, tough fibers with whey proteins and beef plasma. These fibers float at the surface and therefore are easy to separate.

## SUMMARY OF THE INVENTION

The instant invention encompasses a method of recovering protein from food processing waste, comprising, in any order, the addition of xanthan gum, and adjustment in pH, such that the protein is precipitated as easily separable fibers.

## DETAILED DESCRIPTION OF THE INVENTION

The instant invention encompasses a method of recovering protein from food processing waste comprising in any order:

(a) adding xanthan gum to food processing waste, and;

(b) adjusting the pH of the food processing to within 2 pH units of the isoelectric point of the protein, said xanthan being added in an amount effective at said pH to precipitate said protein in the form of fibers.

For purposes of this specification the food processing waste comprises one or more protein bearing substituents. Accordingly a food processing waste is herein defined to include, but is not limited to, waste streams comprising dairy waste such as sweet whey or acid whey, and meat processing and slaughter house waste such as those containing animal plasma such as bovine plasma or porcine plasma.

For purposes of this specification the isoelectric point of the protein is intended to be the literature value of the major protein constituent in the food processing waste. For example albumin is known to be the greatest constituent in bovine plasma constitutes about 45% of the protein therein. Accordingly, in that no other plasma protein is present in amount greater than or equal to 45%, the isoelectric point of the plasma consider to be the isoelectric pH of albumin, that is pI = 4.9.

For purposes of this specification protein shall be define as that determined by the Biuret method.

In one embodiment, present invention concerns a method of recovering proteins from food processing waste comprising whey.

A class of this embodiment concerns a method for recovering protein from a food processing waste consisting substantially of whey and wash water.

A smaller class concerns a method for recovering protein from a food processing waste consisting substantially of whey and wash water comprising in any order:

(a) adding of 0.1 to 0.4 gm xanthan gum to a food processing waste per gram of protein in the food processing waste,

(b) adjusting the pH of the food processing waste to within the range of pH 3.5 to 5.00.

A second embodiment of this invention concerns a method for recovering protein from food processing waste comprising at least one of;

(a) bovine plasma,

(b) porcine plasma, the method comprising:

(1) adding xanthan gum to the food processing waste, and;

(2) adjusting the pH of the food processing waste to within 2 pH units of the isoelectric point of the protein, said xanthan being added in an amount effective at said pH to precipitate said protein in the form of fibers.

Any or all of the above describes methods may optionally comprise separation by filtration liquid cyclone or centrifugation. The method may also optionally comprise partial preconcentration of the waste to up to 5, 10, 15 or 20% protein by ultrafiltration or reverse osmosis.

The following examples are intended to illustrate the invention and as such are not to be considered as limiting the invention set forth in the claims appended hereto.

As is shown in the Examples provided below, the addition of xanthan to beef plasma or to reconstituted whey, accompanied by a gentle stirring, results in a precipitate in the form of long tough fibers with comprising proteins wherein such fibers float to the surface. Such proteins maybe easily separated either by filtration, liquid cyclone, or centrifugation, which do not require sophisticated and expensive equipment.

EXAMPLE 1

In this Example, 3 polysaccharides are used, i.e. xanthan gum, Keltrol T (Kelco, Division of Merck Co. and Inc.) alginate, Manugel GHB (Kelco division of Merck Co. and Inc.) and carboxymethylcellulose, CMC 7HF (Aqualon Company). Whey protein concentrate, LPD-0 (Danmark Protein A.S.) is used as the protein to be recovered. The concentration of protein and polysaccharide solutions are 2% and 0.4%, respectively. After mixing an equal amount of the protein and polysaccharide solutions, the pH is adjusted to 3.5, 4.0 and 4.5, respectively, with 1 N HCl. Then the time required to filter 30 ml of the mixture through a 11 cm Whatman No. 1 filter paper is recorded to indicate the separability of the complexes from each preparation. The results are summarized in Table 1. These results indicate: 1) Different polysaccharides require a different optimum pH for the maximized complexing; 2) Keltrol T forms a fleecy, fibrous complex with whey proteins, which is the easiest to filter and separate from the aqueous solution. 3) CMC and Manugel GHB form a powder-like complexes with whey proteins, which are more difficult to filter.

## TABLE 1-A

Time required to filter 30 ml protein/poly-saccharide mixture through a 11 cm Whatman No. 1 filter paper.

| Sample | pH | Time Required to Complete Filtration |
|---|---|---|
| 2% LPD-0 solution[1] | 3.5 | > 1 hour |
| Same | 4.0 | > 1 hour |
| Same | 4.5 | > 1 hour |
| CMC + LPD-0[2] | 3.5 | 11 minutes |
| Same | 4.0 | would not filter through |
| Same | 4.5 | would not filter through |
| GHB + LPD-0[3] | 3.5 | 10 minutes |
| Same | 4.0 | 7 minutes |
| Same | 4.5 | 29 minutes |
| Keltrol T + LPD-0[4] | 3.5 | 20 minutes |
| Same | 4.0 | 4 minutes 20 second |
| Same | 4.5 | 5 minutes 30 second |

1) LPD-0: Lacprodan-0, produced by Danmark Protein A.S., Aarhus, Denmark.

2) 30 ml of a mixture of an equal amount of 0.4% CMC and 2% LPD-0. CMC (Carboxymethylcellulose) is manufactured by Aqualon Company, Wilmington, DE 19850-5417, USA.

3) 30 ml of a mixture of an equal amount of 0.4% Manugel GHB and 2% LPD-0. Manugel GHB is manufactured by Kelco, Division Merck Co. and Inc., San Diego, Ca 92123, USA.

4) 30 ml of a mixture of an equal amount of 0.4% Keltrol and 2% LPD-0. Keltrol T is manufactured by Kelco, Division of Merck Co. and Inc., San Diego, CA 92123, USA.

EXAMPLE 2

In a series of experiments we conducted to determine the percent of protein that can be recovered from whey by addition of Manuzel GHB, CMC and Keltrol and respectively. The procedure and results are as follows:

Procedure for Recovery of whey proteins:

1. 0.4% w/v, gum solutions: Hydrate 1.2 g of gum in 300 ml tap water at room temperature under stirring at 800 rpm for 1 hr.

2. 2%, w/v, Lacprodan-80 whey protein solution: Hydrae 20 g of the protein in 1000 ml tap water at room temperature under stirring at 500 rpm for 1 hr.

3. Mix 15 ml A with 15 ml B and adjust the pH with 0.1 N HCL to 4.0 and filter the suspension on a 11 cm Whatman No. 1 filter paper.

Table 2

| Protein concentration | Gum concentration | pH | Protein Recovery |
|---|---|---|---|
| 0.75 % Lacprodan-80 | 0.2% Manugel GHB | 4.0 | 81.3 |
| 0.75 % Lacprodan-80 | 0.2% CMC | 4.0 | 66.7 |
| 0.75 % Lacprodan-80 | 0.2% Keltrol T | 4.0 | 61.3 |
| 0.75 % Lacprodan-80 | 0.2% Manugel GHB | 3.5 | 80.0 |
| 0.75 % Lacprodan-80 | 0.2% CMC | 3.5 | 62.7 |
| 0.75 % Lacprodan-80 | 0.2% Keltrol T | 3.5 | 54.7 |

$$\text{Protein Recovery (\%)} = \frac{\text{Total Protein} - \text{Protein of the filtrate}}{\text{Total Protein}} \times 100$$

| Composition | Typical Analysis Lacprodan |
|---|---|
| Crude Protein | 78.1 |
| Lactose | 3.2 |
| Fat | 8.0 |
| Ash | 2.5 |
| Moisture | 4.9 |

EXAMPLE 3

A 1.5% Beef plasma solution was added to a 0.25% Manugel GHB, CMC and Keltrol F solutions respectively. The mixture was gently stirred when pH was adjusted to 4.0. Long tough fibers comprising B plasma protein were formed and floated to the surface when 0.25% Keltrol F was added. Percent Recovery was highest when Manugel GHB was added. See Table 3.

Recovery of beef plasma proteins:

1. 0.5%, w/v, gum solutions: Hydrate 10 g of gum in 1000 ml tap water at room temperature under stirring at 1000 rpm for 1 hr. Dilute a portion of the gum solution with an equal amount of tap water.

2. 2.5%, w/v, beef plasma solution: Hydrate 100 g of the protein in 2000 ml tap water at room temperature under stirrin at 500 rpm for 1 hr. Filter the solution through glass wool to remove insoluble residues. Dilute a portion with an equal amount of tap water.

3. Mix 15 ml A with 15 ml B and adjust the pH to 4.0 with 0.1 N HCL and filter through a 11 cm Whatman No 1 filter paper.

Determination of protein contents of the filtrate:

The protein contents of the filtrate samples were determined using the Biuret method, using Beef Plasma as a standard.

Table 3

| Protein concentration | Gum concentration | pH | Protein Recovery |
|---|---|---|---|
| 1.25 % Beef Plasma | 0.25% Manugel GHB | 4.0 | 91.0 |
| 1.25 % Beef Plasma | 0.25% CMC | 4.0 | 88.0 |
| 1.25 % Beef Plasma | 0.25% Keltrol F | 4.0 | 55.0 |

$$\text{Protein Recovery (\%)} = \frac{\text{Total Protein} - \text{Protein of the filtrate}}{\text{Total Protein}} \times 100$$

| Composition | Typical Analysis Beef Plasma |
|---|---|
| Crude Protein | 74.0 |
| Lactose | --- |
| Fat | 2.5 |
| Ash | 11.0 |
| Moisture | 6.0 |

**Claims**

1. A method of recovering protein from food processing waste comprising in any order:
   (a) adding xanthan gum to food processing waste, and;
   (b) adjusting the pH of the food processing to within 2 pH units of the isoelectric point of the protein, said xanthan being added in an amount effective at said pH to precipitate said protein in the form of fibers.

2. A method according to Claim 1 wherein the food processing waste comprises whey.

3. A method according to Claim 2 wherein the food processing waste comprises sweet whey.

4. A method for according to Claim 3 comprising in any order:
   (a) adding of 0.1 to 0.4 gm xanthan gum to a food processing waste per gram of protein in the food processing waste,
   (b) adjusting the pH of the food processing waste to within the range of pH 3.5 to 5.00.

5. A method according to Claim 4 wherein the pH is adjusted to pH 4.0 to 5.0.

6. A method according to Claim 4 wherein the pH is adjusted to pH 4.0 to 4.5.

7. A method for recovering protein from food processing waste comprising at least one of;
   (a) bovine plasma,
   (b) porcine plasma,
   (c) potato proteins, the method comprising:
      (1) adding xanthan gum to the food processing waste, and;
      (2) adjusting the pH of the food processing waste to within 2 pH units of the isoelectric point of the protein, said xanthan being added in an amount effective at said pH to precipitate said protein in the form of fibers.

8. A method according to Claim 7 wherein the food processing waste comprises bovine plasma.

9. A method for according to Claim 8 comprising in any order:
   (a) adding of 0.1 to 0.3 gm xanthan gum to a food processing waste per gram of protein in the food processing waste,
   (b) adjusting the pH of the food processing waste to within the range of pH 3.5 to 5.0.

10. A method according to Claim 9 wherein the pH is adjusted to pH 4.0 to 5.0.

11. A method according to Claim 10 wherein the pH is adjusted to pH 4.0 to 4.5.

European
Patent Office

EUROPEAN SEARCH
REPORT

Application Number

EP 91 20 2034

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | SCIENCES DES ALIMENTS, vol. 6, no. 2, 1986, pages 137-145, FR; M.-P. GONCALVES et al.: "The precipitation of bovine blood plasma proteins by anionic polysaccharides" * Pages 137-145 * — — — | 1,7-8 | A 23 J 1/20 A 23 J 1/06 A 23 J 1/00 |
| A | FR-A-2 557 431 (KRAFT INC.) — — — — — | | |

TECHNICAL FIELDS SEARCHED (Int. Cl.5)

A 23 J

The present search report has been drawn up for all claims

| Place of search | Date of completion of search | Examiner |
|---|---|---|
| The Hague | 21 October 91 | SANTOS Y DIAZ A.I. |